Europäisches Patentamt

European Patent Office

Office européen des brevets

(11) Publication number: **0 414 912 A1**

# EUROPEAN PATENT APPLICATION
## published in accordance with Art. 158(3) EPC

(21) Application number: 90903415.9

(22) Date of filing: 26.02.90

(86) International application number:
PCT/JP90/00231

(87) International publication number:
WO 90/10262 (07.09.90 90/21)

(51) Int. Cl.⁵: **G05B 19/403, G05B 19/405**

(30) Priority: 01.03.89 JP 148970/89

(43) Date of publication of application:
06.03.91 Bulletin 91/10

(84) Designated Contracting States:
**DE FR GB**

(71) Applicant: **FANUC LTD.**
**3580, Shibokusa Aza-Komanba, Oshino-mura**
**Minamitsuru-gun, Yamanashi 401-05(JP)**

(72) Inventor: **KAWAMURA, Hideaki**
**1375-5, Naraharamachi Hachioji-shi**
**Tokyo 193(JP)**
Inventor: **NAGAOKA, Yukihito**
**Green Hill Terada 219-4 432, Teradamachi**
**Hachioji-shi Tokyo 193(JP)**

(74) Representative: **Brunner, Michael John et al**
**GILL JENNINGS & EVERY 53-64 Chancery**
**Lane**
**London WC2A 1HN(GB)**

(54) **CNC SCREEN LAYOUT METHOD.**

(57) This invention pertains to a CNC screen layout system in a numerical control device system that stores a dedicated utility in its main memory. The layout of a screen is determined by an operator, and data thereof is inputted (S1). The dedicated utility generates display screen data (S2) based on this data. This display screen data is transformed to an intermediate data and stored in an external memory (S3),and interpreted by the operation of the operator,etc. and displayed on the screen (S4). Thus, screen layout for application software is possible in a short time even by a person without any expertise in the program development language.

Fig. 1

## CNC SCREEN IMAGE CREATION SYSTEM

TECHNICAL FIELD

The present invention relates to a screen image creation system for application software used in a system for a numerical control apparatus, and more specifically, to a CNC screen image creation system enabling a screen image to be created without the use of a special program development language, by providing the system for the numerical control apparatus with a dedicated utility.

BACKGROUND ART

A multi-processor system is now used for a system for a numerical control apparatus, due to a higher operating speed of the microprocessor and an increase at a memory capacity, and further, this system has become more complex because of the addition of an interactive type machining program creation function and the like. As an example of such a system, the applicant disclosed, in Japanese Patent Laid-Open Publication No. 62-43703, a system for a numerical control apparatus comprising a CNC (numerical control apparatus), an MMC (man machine controller), a PMC (programmable machine controller) and the like.

The MMC (man machine controller) is arranged such that it can interactively create a machining program as an interface between an operator and the system for the numerical control apparatus and comprises a dedicated microprocessor, memories, display, input key and the like.

A machine builder can create a data display screen, data input screen and graphic display screen dedicated to each machine tool, using the MMC (man machine controller).

Although the user of a CNC machine tool can finally interactively input a machining program and the like, a data display screen, data input screen and the like necessary for the input must be created in correspondence to each machined tool, and a program is created using a program development language such as the C language, to create these screen images.

Accordingly, a person in charge of the creation of the screen images must have an expert knowledge of the program development language. Further, after a layout of the screen images has been determined, coding and debugging must be repeated, and thus a time necessary for creating the screen images, and the reliability thereof, greatly depend on the technical level of the person creating the screen images.

DISCLOSURE OF THE INVENTION

Taking the above into consideration, an object of the present invention is to provide a CNC screen image creation system which enables a person not having an expert knowledge of a program development language to easily create screen images for application software, in a short time.

To solve the above problem, according to the present invention, there is provided a CNC screen image creation system in a system for a numerical control apparatus, which comprises the steps of storing a dedicated utility in a main memory, storing screen image data input by an operator in an external memory, using the dedicated utility as intermediate data, and reproducing the screen image by interpreting the intermediate data, as necessary.

Data input to a display are converted into intermediate data, using the dedicated utility, and stored in an external memory. When specified by the operation of an operator, a machining program and the like, the intermediate data are interpreted by the dedicated utility or dedicated software linking a driver having the same function as that of the intermediate data interpretation portion of the dedicated utility, and displayed on the display.

BRIEF DESCRIPTION OF THE DRAWINGS

Figure 1 is a flowchart showing the flow of a CNC screen image creation system according to the present invention; and

Figure 2 is a conceptual diagram of a CNC system embodying the present invention.

BEST MODE OF CARRYING OUT THE INVENTION

An embodiment of the present invention will be described below with reference to the drawings.

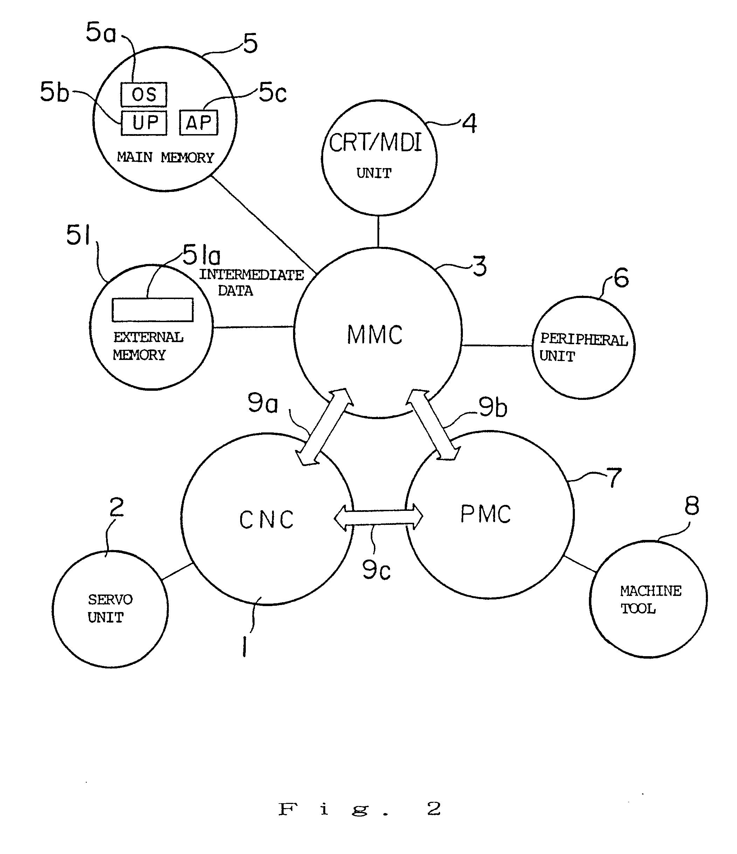

Figure 2 is a conceptual view of a CNC system embodying the present invention. A CNC (numerical control apparatus) 1 executes the control of the CNC system as a whole, and further controls servo motors. For this purpose, a servo unit 2 is connected to the CNC. Although the only one servo unit is shown in Figure 2, servo units corresponding to the number of axes are, of course, connected thereto.

An MMC (man machine controller) 3 functions as an interface between an operator and the CNC system. For this purpose, a CRT/MDI unit 4 having a CRT and an operation key is connected to the MMC. Therefore, the operator can be made aware of the state of the CNC system from the CRT, and can input necessary data through the operation key. Further, a main memory 5 is connected to the MMC 3.

The main memory 5 includes an operating system (OS) 5a. Note an OS for a commercially available personal computer can be used as it is as the OS 5a. A dedicated utility (UP) converts data input through operation keys of the CRT/MDI unit 4 into intermediate data or interprets the intermediate data and displays them on a display. The user software (AP) 5c is application software created by a machine builder and has a display function corresponding to each machine tool. Linked to the application software is a driver having same function as that of the intermediate data interpretation portion of the above dedicated utility which interprets the intermediate data and displays the same on the display.

Further, an external memory 51 is connected to the MMC 3. A hard disk, floppy disk or the like is used as the external memory 51. The intermediate data 51a is stored in the external memory 51.

Furthermore, peripheral units 6 such as a paper tape puncher, paper tape reader, printer and the like can be connected to the MMC 3, so that necessary data can be input and output.

A PMC (programmable machine controller) 7 receives an M function command, S function command, T function command and the like from the CNC 1 to control the machine tool 8, and in addition, the PMC receives signals from the various switches and the like of the machine tool 8 to controls actuators such as hydraulic cylinders of the machine tool 8.

The CNC 1, MMC 3, and PMC 7 are arranged as a microprocessor configuration, interconnected through windows 9a, 9b and 9c, respectively, and can receive and supply necessary signals.

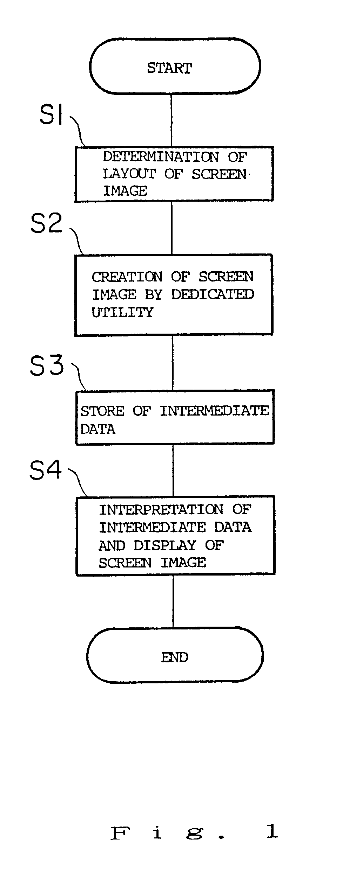

Figure 1 is a flowchart showing the flow of a CNC screen image creation system of the present invention, wherein numerals prefixed with an "S" indicate the numbers of the steps of the process.

First, at step 1, the operator determines the layout of a screen image and inputs necessary data. The display can display the following displays and perform the following functions:

(a) Display of Fixed Information;

The fixed information is such that when it is displayed once, the content thereof need not be changed thereafter and includes character and graphic information. In addition, the fixed information can specify and display a data file stored in the external memory.

(b) Dynamic Information;

Dynamic information is such that displayed information is changed with an elapse of time and the content thereof must be rewritten at predetermined intervals. For example, the dynamic information includes the present position of each axis of the numerical control apparatus, I/O signals and the like. In addition, the dynamic information can display a request for data input on the display and store input data in a specified field.

(c) Calling Up Functions;

Functions or variables created by a user can be called up on the display. These functions or variables are input and stored in the external memory as the intermediate data.

(d) Cursor Movement

A cursor can be displayed at a specified field, or the cursor can be deleted. Furthermore, an operator can interrogate the position of the cursor to move same.

In addition, data specified by the cursor can be changed, and if the data is data in the data file stored in the external memory, the data in the data file is simultaneously rewritten.

(e) Dialog with Operator

A dialog with the operator can be carried out. Namely, a request for an input, or a message to the operator, can be displayed.

The operator selects these displays and functions and creates required screen images.

When data for the screen image are input, the screen image data are created by the dedicated utility at step S2, and further, the screen image data are converted into the intermediate data and stored in the external memory at step S3. When the display of the intermediate data are indicated by the operator, a system program, a machining program or the like, the dedicated utility or the above application software to which the above dedicated driver is linked interprets the intermediate data and displays the necessary data at step S4. The display includes fixed information, dynamic information, requests for data input, and the like.

In this manner, the operator can create the necessary screen images with the help of the dedicated utility. Since the creation of these screen images is interactively carried out by the dedicated utility, the operator does not need to use a program development language, in principle, but a program can be created by using the program development language and the screen image of the program can be combined with the screen image created by the above utility, to create a more detailed screen image.

In the above description, although the system for the numerical control apparatus comprises the CNC, MMC and PMC, it may comprise the CNC only, the CNC and MMC, or the CNC and PMC. In these cases, the main memory or external memory is connected to any of the CNC, MMC, and PMC.

Further, in the above description, although the CNC screen image creation system of the present invention is described with respect to the system for the numerical control apparatus, it is not limited thereto but can be also applied to, for example, an automatic program creation apparatus for creating a machining program, and the like, in the same way. Furthermore, it is also applicable to a generally used personal computer. In addition, only the dedicated utility can be operated in the generally used personal computer and an intermediate data created by the dedicated utility utilized by the system for the numerically controlled apparatus.

As described above, according to the present invention, since the creation of screen images is assisted by the dedicated utility, even a person not having an expert knowledge of program development languages can easily create screen images for application software in a short time, if the layout of the screen images is determined.

## Claims

1. A CNC screen image creation system in a system for a numerical control apparatus, comprising the steps of:

   storing a dedicated utility in a main memory;

   storing screen image data input by an operator in an external memory by said dedicated utility as intermediate data; and

   reproducing said screen image by interpreting said intermediate data, as necessary.

2. A CNC screen image creation system according to claim 1, wherein data in a data file stored in said external memory is specified for display.

3. A CNC screen image creation system according to claim 1, wherein functions and variables made by a user are specified for display and said functions and variables are displayed by using said intermediate data.

4. A CNC screen image creation system according to claim 1, wherein a cursor is moved to an arbitrary position on a reproduced screen image to change data indicated by said cursor, and when said data is a display of a data file stored in said external memory, the content thereof is also changed.

Fig. 1

F i g . 2

According to International Patent Classification (IPC) or to both National Classification and IPC

Int. Cl[5]    G05B19/403, 19/405

**I. FIELDS SEARCHED**

Minimum Documentation Searched [*]

| assification System | Classification Symbols |
|---|---|
| IPC | G05B19/403, 19/405 |

Documentation Searched other than Minimum Documentation
to the Extent that such Documents are Included in the Fields Searched [8]

| | |
|---|---|
| Jitsuyo Shinan Koho | 1971 – 1989 |
| Kokai Jitsuyo Shinan Koho | 1971 – 1989 |

**II. DOCUMENTS CONSIDERED TO BE RELEVANT** [*]

| ttegory [*] | Citation of Document, [**] with indication, where appropriate, of the relevant passages [1-] | Relevant to Claim No. [13] |
|---|---|---|
| X | JP, A, 62-256006 (Mitsubishi Electric Corp.), 7 November 1987 (07. 11. 87), (Family: none) | 1 – 4 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance: the claimed invention cannot be considered novel or cannot be considered to involve an inventive step

"Y"  document of particular relevance, the claimed invention cannot be considered to involve an inventive step when the document is combined with one or more other such documents, such combination being obvious to a person skilled in the art

"&"  document member of the same patent family

**V. CERTIFICATION**

| Date of the Actual Completion of the International Search | Date of Mailing of this International Search Report |
|---|---|
| May 24, 1990 (24. 05. 90) | June 4, 1990 (04. 06. 90) |
| International Searching Authority | Signature of Authorized Officer |
| Japanese Patent Office | |